# EUROPEAN PATENT APPLICATION

(11) **EP 4 230 681 A1**
(43) Date of publication of application: **23.08.2023**
(21) Application number: 21880327.8
(22) Date of filing: 14.09.2021
(51) Int. Cl.: C08G 65/40, C08G 65/46

(54) **METHOD FOR CRYSTALLIZING HIGHLY FUNCTIONAL POLYMER BY POST-PROCESSING, AND CRYSTALLINE POLYMER PRODUCED THEREBY**

(30) Priority: 15.10.2020 KR 20200133339
(71) Applicant: Hanwha Solutions Corporation, Jung-gu Seoul 04541 (KR)
(72) Inventor: PARK, Myung Chul, Daejeon 34128 (KR); CHO, Shin Je, Daejeon 34128 (KR); KANG, Ha Na, Daejeon 34128 (KR); SHIN, Bong Seon, Daejeon 34128 (KR); LEE, Jeong Min, Daejeon 34128 (KR)
(74) Representative: Berggren Oy
(86) International application number: PCT/KR2021/012495
(87) International publication number: WO 2022/080679

(57) **Abstract**

The present disclosure relates to a method for crystallizing highly functional polymer by post-processing and crystalline polymer produced by the method, and more specifically, is characterized by producing crystalline polyaryletherketone (PAEK) by heat treating polyaryletherketone (PAEK) provided in the form of pellets or powders at a temperature of glass transition temperature (Tg) to melting point (Tm).

## Description

### BACKGROUND OF THE INVENTION

### (a) Field of the Invention

The present disclosure relates to a method for crystallizing highly functional polymer by post-processing and crystalline polymer produced by the method, and more specifically, is characterized by producing crystalline polyaryletherketone (PAEK) by heat treating polyaryletherketone (PAEK) provided in the form of pellets or powders at a temperature of glass transition temperature (Tg) to melting point (Tm).

### (b) Description of the Related Art

Polyaryletherketone (PAEK) is a generic term of industrial resins already known, and the kinds include polyetherketone, polyetheretherketone, polyetherketoneketone and copolymers of polyetherketone and polyetherketoneketone, and the like.

Since the polyaryletherketone (PAEK) has high heat resistance and yet has excellent mechanical strength, it is super ultra high-performance plastic variously used in the fields of automobile, aerospace, energy, electrical and electronics.

Further, among various polyaryletherketone (PAEK) polymers, polyetherketoneketone (PEKK) represented by the following Chemical Formula particularly has high resistance and excellent strength, and thus, is being widely used as engineering plastics. Engineering plastics are being used in the fields of automobile, aircraft, electrical and electronic apparatus, machine, and the like, and the application area is gradually expanding.

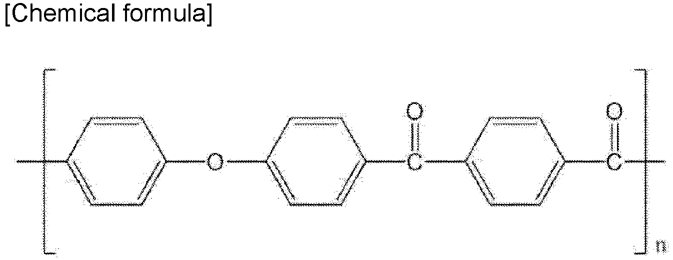

With the expansion of the application area of engineering plastics, the use environment becomes more and more severe, and thus, there is a need for polyetherketoneketone (PEEK) compounds exhibiting more improved properties. However, polyetherketoneketone (PEEK), due to the influence of an isophthaloyl moiety, tends to exhibit amorphousness or low crystallinity. Thus, it has problems of inconsistent product color, and deterioration of thermal properties.

Thus, the inventors of the present disclosure, during studies for solving these problems, found out that in case the polyaryletherketone (PAEK) series polymer is subjected to heat treatment at glass transition temperature (Tg) to melting point (Tm) as post-processing, the crystallinity of the polyaryletherketone (PAEK) can be increased, and completed the invention.

In this regard, Japanese Laid-Open Patent Publication No. 2014-224274 discloses a method for preparing polyether ether ketone resin.

### SUMMARY OF THE INVENTION

In order to solve the above-described problems of the prior art, it is an object of the invention to provide a method for crystallizing polyaryletherketone (PAEK) in a form of pellet or powder that is amorphous or has crystallinity of 5% or less.

It is another object of the invention to provide crystalline polyaryletherketone (PAEK) produced by the crystallization method.

As a technical solution for achieving the above-explained technical problems, according to one aspect of the invention, there is provided a method for crystallizing polyaryletherketone (PAEK), comprising steps of:
preparing polyaryletherketone (PAEK) in a form of pellet or powder that is amorphous or has crystallinity of 5% or less; and heat treating the prepared polyaryletherketone (PAEK) at a temperature of glass transition temperature (Tg) to melting point (Tm) under inert gas atmosphere.

The polyaryletherketone (PAEK) may be polymer selected from the group consisting of polyetherketoneketone (PEKK), polyetheretherketone (PEEK), polyetheretherketoneketone (PEEKK), polyetherketoneetherketoneketone (PEKEKK), polyetheretheretherketone (PEEEK), polyetherdiphenyletherketone (PEDEK) and a combination thereof.

The polyaryletherketone (PAEK) may have T:I isomer ratio of 50:50 to 90:10.

The polyaryletherketone (PAEK) may have T:I isomer ratio of 60:40 to 85:15.

The polyaryletherketone (PAEK) may have T:I isomer ratio of 70:30.

The polyaryletherketone (PAEK) in the form of pellet or powder may have a diameter of 1 mm to 10 mm and a length of 1 mm to 10 mm.

The polyaryletherketone (PAEK) that is amorphous or has crystallinity of 5% or less may have a diameter of 2 mm to 4 mm and a length of 3 mm to 5 mm.

The polyaryletherketone (PAEK) that is amorphous or has crystallinity of 5% or less is prepared by heat treatment at a temperature of 160°C to 300°C.

The heat treatment of the polyaryletherketone (PAEK) may be conducted at a temperature of 150 °C to 340 °C.

The heat treatment of the polyaryletherketone (PAEK) may be conducted at a temperature of 160°C to 280°C.

The heat treatment of the polyaryletherketone (PAEK) may be conducted at a temperature of 160°C to 250°C.

The heat treatment of the polyaryletherketone (PAEK) may be conducted for 10 minutes or more.

The heat treatment of the polyaryletherketone (PAEK) may be conducted for 10 minutes to 60 minutes.

The heat treatment of the polyaryletherketone (PAEK) may be conducted while agitating the polyaryletherketone (PAEK) in the form of pellet or powder.

The heat treatment of the polyaryletherketone (PAEK) may be conducted using a spiral elevator for vibrating the polyaryletherketone (PAEK) in the form of pellet or powder.

The inert gas may be continuously fed to the polyaryletherketone (PAEK), and the feed flow rate of the inert gas may be 10 mL/min or more.

The feed flow rate of the inert gas may be 20 mL/min to 80 mL/min.

A color difference (△) between the prepared polyaryletherketone (PAEK) and heat treated polyaryletherketone (PAEK) may be less than 1.8.

According to another aspect of the invention, there is provided crystalline polyaryletherketone (PAEK) produced by the above crystallization method.

The crystallinity of the produced crystalline polyaryletherketone (PAEK) may be 20% or more.

The crystallinity of the produced crystalline polyaryletherketone (PAEK) may be 30% to 35%.

According to yet another aspect of the invention, there is provided an article manufactured by a technique selected from laser sintering, fused deposition modeling, forming, injection molding, extrusion, thermoforming, rotation molding, compression molding, compounding or impregnation, using the crystalline polyaryletherketone (PAEK) produced by the above crystallization method.

The method for crystallizing polyaryletherketone (PAEK) according to the invention can increase crystallinity of polyaryletherketone (PAEK) by a simple method of heat treating polyaryletherketone (PAEK) in the form of pellets of powders at a temperature of glass transition temperature (Tg) to melting point (Tm) under inert gas atmosphere.

Further, the crystallinity of produced polyaryletherketone (PAEK) can be controlled by controlling the temperature and time of the heat treatment, and the flow rate of inert gas fed.

Moreover, caking of polyaryletherketone (PAEK) in the form of pellets of powders can be prevented by continuously agitating or vibrating polyaryletherketone (PAEK) during the heat treatment.

Finally, oxidation and discoloration of polyaryletherketone (PAEK) can be prevented by conducting the heat treatment under inert gas atmosphere.

### BRIEF DESCRIPTION OF THE DRAWINGS

Fig. 1 is a flow chart schematically showing the method for crystallizing polyaryletherketone (PAEK) according to one embodiment of the invention.
Fig. 2 is a photograph showing caking of polyaryletherketone (PAEK) according to one example of the invention.

### DETAILED DESCRIPTION OF THE EMBODIMENTS

Hereinafter, examples of the invention will be explained in detail such that a person having ordinary knowledge in the technical field to which the invention pertains can easily practice it. However, the invention may be embodied in various forms, and is not limited by examples described herein.

### Example 1. Preparation of crystalline polyetherketoneketone (PEKK)

### 1. Preparation of amorphous polyetherketoneketone (PEKK)

Polyetherketoneketone (PEKK) granules with T:I isomer ratio of 70:30 were extruded at a temperature of 160°C to 300°C, preferably 160°C to 250°C in an extruder, and the extrudate was cut to obtain amorphous polyetherketoneketone (PEKK) in the form of pellets. Wherein, the diameter of the obtained polyetherketoneketone (PEKK) pellet was 2 mm to 4 mm, and the length was 3 mm to 5 mm. Further, the obtained polyetherketoneketone (PEKK) pellet was in an amorphous state, and exhibited crystallinity of 0% to 5%.

### 2. Preparation of crystalline polyetherketoneketone (PEKK)

The polyetherketoneketone (PEKK) pellets obtained in 1. above were inserted in a reactor equipped with an agitator inside, and heat treatment was conducted while continuously purging nitrogen, thus obtaining crystalline polyetherketoneketone (PEKK). Wherein, the temperature of the heat treatment was 160°C, and the heat treatment was conducted for 30 minutes. Further, flow rate of nitrogen purge was 80 mL/min. Wherein, the heat treatment temperature was measured using DSC2500 model from TA Instruments.

### Example 2. Preparation of crystalline polyetherketoneketone (PEKK)

Crystalline polyetherketoneketone (PEKK) was obtained by the same method as Example 1, except that the heat treatment temperature was changed to 190°C in 2. of Example 1.

### Example 3. Preparation of crystalline polyetherketoneketone (PEKK)

Crystalline polyetherketoneketone (PEKK) was obtained by the same method as Example 1, except that the heat treatment temperature was changed to 220°C in 2. of Example 1.

### Example 4. Preparation of crystalline polyetherketoneketone (PEKK)

Crystalline polyetherketoneketone (PEKK) was obtained by the same method as Example 1, except that the heat treatment temperature was changed to 250°C in 2. of Example 1.

### Example 5. Preparation of crystalline polyetherketoneketone (PEKK)

Crystalline polyetherketoneketone (PEKK) was obtained by the same method as Example 1, except that the heat treatment temperature was changed to 280°C in 2. of Example 1.

### Example 6. Preparation of crystalline polyetherketoneketone (PEKK)

Crystalline polyetherketoneketone (PEKK) was obtained by the same method as Example 1, except that the heat treatment temperature was changed to 220°C, and the heat treatment time was changed to 10 minutes in 2. of Example 1.

### Example 7. Preparation of crystalline polyetherketoneketone (PEKK)

Crystalline polyetherketoneketone (PEKK) was obtained by the same method as Example 1, except that the heat treatment temperature was changed to 250°C, and the heat treatment time was changed to 10 minutes in 2. of Example 1.

### Example 8. Preparation of crystalline polyetherketoneketone (PEKK)

Crystalline polyetherketoneketone (PEKK) was obtained by the same method as Example 1, except that the heat treatment temperature was changed to 250°C, and the flow rate of nitrogen purge was changed to 20 mL/min in 2. of Example 1.

### Example 9. Preparation of crystalline polyetherketoneketone (PEKK)

Crystalline polyetherketoneketone (PEKK) was obtained by the same method as Example 1, except that the heat treatment temperature was changed to 250°C, and the flow rate of nitrogen purge was changed to 50 mL/min in 2. of Example 1.

### Comparative Example 1. Preparation of crystalline polyetherketoneketone (PEKK)

Crystalline polyetherketoneketone (PEKK) was obtained by the same method as Example 1, except that the heat treatment temperature was changed to 250°C, and nitrogen purge was not conducted in 2. of Example 1.

### Experimental Example 1. Measurement of crystallinity of polyetherketoneketone (PEKK) according to heat treatment temperature

In order to compare the crystallinities of polyetherketoneketones (PEKK) according to heat treatment temperature, the crystallinities of the polyetherketoneketones (PEKK) obtained in Examples 1 to 5 were measured and shown in the following Table 1.

**[Table 1]**

| | Temperature (°C) | Time (min) | Crystallinity (%) | Caking |
|---|---|---|---|---|
| Example 1 | 169 | 30 | 28 | Small |
| Example 2 | 190 | 30 | 31 | Medium |
| Example 3 | 220 | 30 | 33 | Large |
| Example 4 | 250 | 30 | 35 | Large |
| Example 5 | 280 | 30 | 35 | Large |

As shown in the Table 1, it can be confirmed that as a heat treatment temperature increases, the crystallinity of obtained polyetherketoneketone (PEKK) increases. However, in can be confirmed that caking gradually increases at a temperature above glass transition temperature (Tg), and it becomes severe if the temperature exceeds 200°C.

### Experimental Example 2. Measurement of crystallinity of polyetherketoneketone (PEKK) according to heat treatment time

In order to compare crystallinities of polyetherketoneketones (PEKK) according to heat treatment time, the crystallinities of polyetherketoneketones (PEKK) obtained in Examples 3, 4, 6 and 7 were measured and shown in the following Table 2.

**[Table 2]**

| | Temperature (°C) | Time (min) | Crystallinity (%) | Caking |
|---|---|---|---|---|
| Example 3 | 220 | 30 | 33 | Large |
| Example 4 | 250 | 30 | 35 | Large |
| Example 6 | 220 | 10 | 31 | Large |
| Example 7 | 250 | 10 | 34 | Large |

As shown in the Table 2, It can be confirmed that as a heat treatment time increases, the crystallinity of obtained polyetherketoneketone (PEKK) increases to a certain degree. However, it was confirmed that a heat treatment temperature has more influence on the crystallinity of polyetherketoneketone (PEKK) than a heat treatment time.

### Experimental Example 3. Measurement of color difference of polyetherketoneketone (PEKK) according to nitrogen purge flow rate

In order to compare color differences of polyetherketoneketone (PEKK) according to purge flow rate of inert gas nitrogen during heat treatment, the color differences of polyetherketoneketones (PEKK) according to Comparative Example 1 and Examples 4, 8, 9 were compared and shown in the following Table 3. Wherein, as a color-difference meter for measuring a color difference, Nippon Denshoku NE4000 was used, and a color difference of polyetherketoneketone (PEKK) before and after heat treatment was measured.

**[Table 3]**

| | Temperature (°C) | Time (min) | Crystallinity (%) | Caking | N₂ purge (mL/min) | Color difference (△E) |
|---|---|---|---|---|---|---|
| Comparative Example 1 | 250 | 30 | 35 | Large | 0 | 1.8 |
| Example 4 | 250 | 30 | 35 | Large | 80 | 0.1 |
| Example 8 | 250 | 30 | 35 | Large | 20 | 0.7 |
| Example 9 | 250 | 30 | 35 | Large | 50 | 0.5 |

As shown in the Table 3, it can be confirmed that according to the process of Comparative Example wherein nitrogen purge was not conducted, a color difference value was 1.8 and was visually indentifiable. Meanwhile, as the flow rate of nitrogen purged increases, the color difference value decreases, and it can be confirmed that in the case of Example 4, the color difference value was 0.1. Thus, it can be confirmed that feed of inert gas should be necessarily accompanied during heat treatment for the performance and quality of obtained products.

Hereinafter, the invention will be explained in more detail. However, the invention may be embodied in various forms, is not limited by embodiments described herein, and the invention is only definer by the claims described later.

Moreover, terms used herein are used only to explain specific embodiments, and are not intended to limit the invention. A singular expression includes a plural expression thereof, unless it is expressly stated or obvious from the context that such is not intended. Throughout the description of the invention, the expression "comprising" a certain constructional element does not mean to exclude other constructional elements, but means that other constructional elements may be further included, unless otherwise described.

According to the first aspect of the invention,
there is provided a method for crystallizing polyaryletherketone (PAEK), comprising steps of: preparing polyaryletherketone (PAEK) in the form of pellet or powder that is amorphous or has crystallinity of 5% or less; and heat treating the prepared polyaryletherketone (PAEK) at a temperature of glass transition temperature (Tg) to melting point (Tm) under inert gas atmosphere.

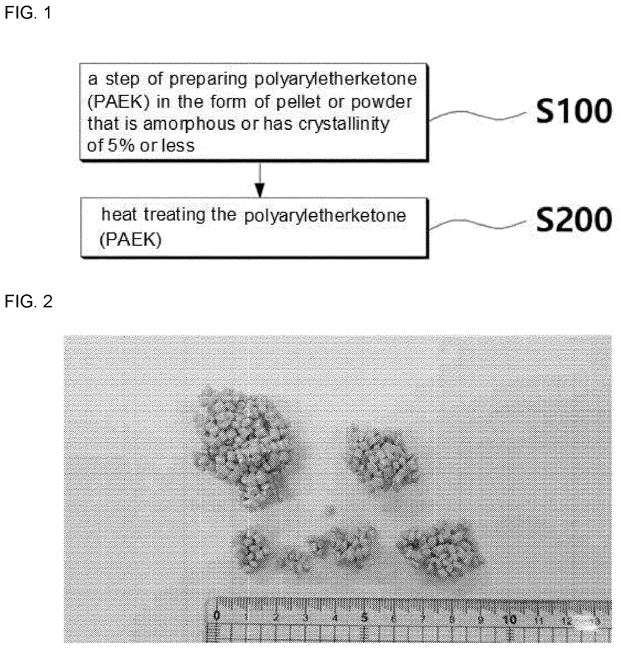

Hereinafter, the method for crystallizing polyaryletherketone (PAEK) according to the first aspect of the invention will be explained in detail according to steps referring to Fig. 1. Wherein, Fig. 1 is a flow chart schematically showing the method for crystallizing polyaryletherketone (PAEK).

First, according to one embodiment, the crystallization method of polyaryletherketone (PAEK) may comprise a step of preparing polyaryletherketone (PAEK) in the form of pellet or powder that is amorphous or has crystallinity of 5% or less (S100).

According to one embodiment, the polyaryletherketone (PAEK) may be polymer selected from the group consisting of polyetherketoneketone (PEKK), polyetheretherketone (PEEK), polyetheretherketoneketone (PEEKK), polyetherketoneetherketoneketone (PEKEKK), polyetheretheretherketone (PEEEK), polyetherdiphenyletherketone (PEDEK) and a combination thereof, and preferably, it may be polyetherketoneketone (PEKK). Wherein, the polyetherketoneketone (PEKK) may be a polymer produced by a series of polymerization of a terephthaloyl moiety represented by the following Chemical Formula 1 and an isophthaloyl moiety represented by the following Chemical Formula 2, and the properties may be determined by the ratio. The terephthaloyl moiety is linear and hard, and the isophthaloyl moiety, which gives structural variety thereto due to its bent structure, may have an influence on the flexibility, flowability and crystallization properties of a polymer chain. Particularly, it appears that the isophthaloyl moiety increases flexibility or flowability, but exhibits low crystallization speed, and for this reason, polymerized polyetherketoneketone (PEKK) may exhibit amorphousness or low crystallinity. Wherein, in case the polyetherketoneketone (PEKK) has a crystallinity, the crystallinity may be 5% or less.

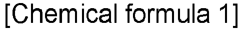

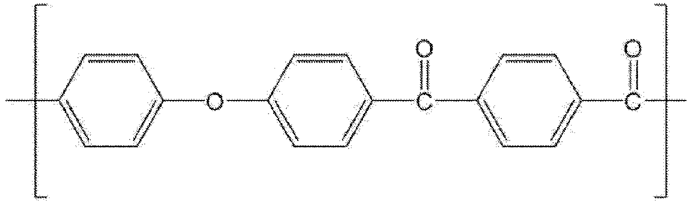

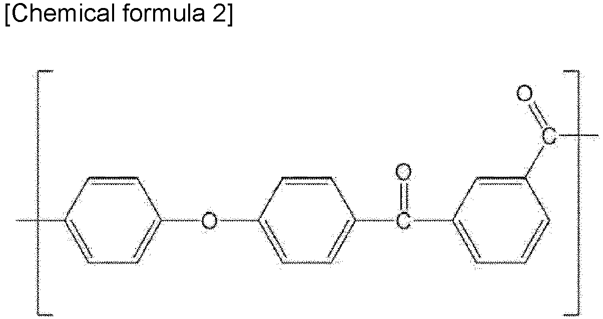

According to one embodiment, the polyaryletherketone (PAEK) that is amorphous or has crystallinity of 5% or less may be provided in the form of pellets or powders. Wherein, the polyaryletherketone (PAEK) that is amorphous or has crystallinity of 5% or less may be prepared by heat treatment at a temperature of 160°C to 300°C, preferably at a temperature of 160°C to 250°C. Meanwhile, the polyaryletherketone (PAEK) that is amorphous or has crystallinity of 5% or less may be preferably provided in the form of pellets, and in this case, the pellet may be prepared by extruding in the above temperature range.

According to one embodiment, the polyaryletherketone (PAEK) that is amorphous or has crystallinity of 5% or less may have T:I isomer ratio of 50:50 to 90:10, preferably 60:40 to 85:15, and according to one example, the ratio may be 70:30. Wherein, the T:I isomer ratio may mean the ratio of isomers represented by the Chemical formulas 1 and 2. Namely, the polyaryletherketone (PAEK) that is amorphous or has crystallinity of 5% or less may comprise two different isomers of ketone-ketone as repeat units. That is, the content of the repeat unit represented by the Chemical formula 1 may be included in an amount equal to or more than the content of the repeat unit represented by the Chemical formula 2, and as the content of the repeat unit represented by the Chemical formula 1 increases, crystallinity of polyaryletherketone (PAEK) comprising the same may become higher.

According to one embodiment, the polyaryletherketone (PAEK) that is amorphous or has crystallinity of 5% or less may have a diameter of 1 mm to 10 mm and a length of 1 mm to 10 mm, preferably a diameter of 2 mm to 4 mm and a length of 3 mm to 5 mm. The ranges of diameter and length may be provided as a suitable size of a practically sold product.

Next, according to one embodiment, the crystallization method of polyaryletherketone (PAEK) may comprise a step of heat treating the polyaryletherketone (PAEK) prepared above at a temperature of glass transition temperature(Tg) to melting point(Tm) under inert gas atmosphere (S200).

According to one embodiment, the heat treatment of polyaryletherketone (PAEK) may be conducted at a temperature of 150°C to 340°C, preferably at a temperature of 160°C to 280°C, and more preferably, at a temperature of 160°C to 250°C. That is, the lower limit of the temperature range may be a glass transition temperature(Tg) of polyaryletherketone (PAEK), and the upper limit may be a melting point(Tm). In this regard, the glass transition temperature(Tg) and melting point(Tm) may vary according to the ratio of T:I isomers included in the polyaryletherketone (PAEK), and in case the T:I isomer ratio of polyaryletherketone (PAEK) that is amorphous or has crystallinity of 5% or less is 50:50 to 90:10, the heat treatment temperature range may be a temperature range capable of covering the same. That is, by heat treating the polyaryletherketone (PAEK) that is amorphous or has crystallinity of 5% or less at the above temperature range, crystallinity may be increased. Meanwhile, in case the polyaryletherketone (PAEK) is heated above a glass transition temperature(Tg), caking of pellets or powders may be generated due to an exothermic reaction while it is crystallized, but if it is heat treated at a temperature of 160°C to 250°C , preferably160°C to 200°C, the caking may be less generated. On the other hand, if the heat treatment temperature increases, caking may be generated relatively a lot, but the crystallinity of polyaryletherketone (PAEK) may increase more. Fig. 2 is a photograph of caking of the polyetherketoneketone (PEKK) pellets according to one example of the invention.

According to one embodiment of the invention, the heat treatment of polyaryletherketone (PAEK) may be conducted for 10 minutes or more, preferably 10 minutes to 60 minutes. Wherein, as the heat treatment time increase, the crystallinity of polyaryletherketone (PAEK) may increase more.

According to one embodiment, a heat source for the heat treatment is not specifically limited, but preferably, hot air or infrared rays(IR) may be used. Wherein, the heat treatment may be conducted in a sealed reactor, and it may be conducted by feeding hot air in the reactor, or irradiating infrared rays(IR) thereto. More specifically, the reactor may be equipped with a certain space inside, and into the space, polyaryletherketone (PAEK) in the form of pellet or powder that is amorphous or has crystallinity of 5% or less may be inserted. Meanwhile, in case hot air is used as a heat source, a hot air feed hopper for supplying hot air in the reactor may be separately equipped, and the hot air feed hopper may be connected with the reactor through a pipe, thus feeding hot air in the reactor. Wherein, the hot air may be fed through the lower part of the reactor. Moreover, a vibration device may be separately installed inside the reactor. Further, in case IR is used as a heat source, an IR emitter may be installed inside the reactor, and the heat treatment may be conducted by IR emitted from the IR emitter. Moreover, inside the reactor, an agitator equipped with an impeller may be installed for agitation, and for the operation of the agitator, an agitation motor may be connected to one side. Further, the reactor may be installed such that it can be self-rotated, and in this case, it may be installed in the form of a cylinder, and it may be transversely laid down and disposed, and then, rotate around the central axis. That is, in order to prevent caking, the reactor may use a spiral elevator capable of feeding vibration, or use an agitator installed inside. Wherein, in case the spiral elevator is used, transfer and crystallization of polyaryletherketone (PAEK) may be simultaneously achieved.

According to one embodiment, the heat treatment of polyaryletherketone (PAEK) may be conducted while agitating polyaryletherketone (PAEK) in the form of pellets or powders. It is a process conducted for preventing caking of pellets or powders, which may be generated by an exothermic reaction during crystallization, when polyaryletherketone (PAEK) is heat treated above glass transition temperature(Tg), as explained above.

According to one embodiment, the heat treatment may be conducted by placing the polyaryletherketone (PAEK) in the form of pellets or powders in a sealed reactor, as explained above. In this case, the agitation may be conducted by using a common agitator, or rotating the reactor. That is, in case the agitator is used, an impeller may continuously apply physical impact to the polyaryletherketone (PAEK) in the form of pellets or powders, thus preventing caking, and in case the reactor is rotated, since the polyaryletherketone (PAEK) in the form of pellets or powders may also continuously rotate together with the reactor, caking may be prevented. Wherein, the use of the agitator and rotation of the reactor may be simultaneously used.

According to one embodiment, the inert gas may be continuously fed to polyaryletherketone (PAEK). During the heat treatment process, by continuously feeding inert gas, oxidation of polyaryletherketone (PAEK) may be prevented, thereby preventing discoloration of the polyaryletherketone (PAEK). Wherein, as the inert gas, commonly known inert gas may be used, and for example, nitrogen (N₂), argon (Ar) or helium (He), and the like may be used.

According to one embodiment, the heat treatment may be conducted by placing the polyaryletherketone (PAEK) in the form of pellets or powders in a sealed reactor, as explained above, and in this case, the inert gas may be continuously fed in the reactor. Wherein, the flow rate of the inert gas fed may be 10 mL/min or more, preferably 20 mL/min to 80 mL/min.

According to one embodiment, a color difference (△) between the prepared polyaryletherketone (PAEK) and heat treated polyaryletherketone (PAEK) may be less than 1.8, preferably 0.7 or less, more preferably 0.5 or less, and most preferably 0.1. The color difference (△) between the prepared polyaryletherketone (PAEK) and heat treated polyaryletherketone (PAEK) may be related to the flow rate of the inert gas continuously fed, and as the flow rate of the inert gas fed increases, the color difference value may decrease. That is, a small color difference may mean that the rate of polyaryletherketone (PAEK) being oxidized during the heat treatment is small, and may mean that a degree of discoloration is small.

According to the second aspect of the invention,
there is provided crystalline polyaryletherketone (PAEK) produced by the crystallization method of the first aspect of the invention.

According to the third aspect of the invention,
there is provided an article manufactured by a technique selected from laser sintering, fused deposition modeling, forming, injection molding, extrusion, thermoforming, rotation molding, compression molding, compounding or impregnation, using the crystalline polyaryletherketone (PAEK) produced by the crystallization method of the first aspect of the invention.

For the parts overlapping with the first aspect of the invention, detailed descriptions have been omitted, but the same as explained for the first aspect of the invention may apply to the second and third aspects, even if the descriptions are omitted.

Hereinafter, the crystalline polyaryletherketone (PAEK) according to the second aspect of the invention and the article according to the third aspect of the invention will be explained in detail.

According to one embodiment, the crystalline polyaryletherketone (PAEK) may have increased crystallinity, compared to polyaryletherketone (PAEK) that is amorphous or has crystallinity of 5% or less, prepared before conducting the crystallization method. That is, by obtaining crystalline polyaryletherketone (PAEK) with high crystallinity, the thermal properties of the polyaryletherketone (PAEK) may be improved.

According to one embodiment, the crystallinity of the crystalline polyaryletherketone (PAEK) produced above may be 20% or more, preferably 28% to 35%, and most preferably 30% to 35%. Wherein, the crystallinity of crystalline polyaryletherketone (PAEK) produced above may be related to the heat treatment temperature and time according to the first aspect of the invention. Specifically, as the heat treatment temperature and time increase, the crystallinity may increase. Since the detailed explanations thereof have been described in the first aspect of the invention, specific explanations will be omitted in the second aspect of the invention.

According to one embodiment, the crystalline polyaryletherketone (PAEK) produced above may be obtained in the form of pellets or powders, which may be subjected to a technique selected from laser sintering, fused deposition modeling, forming, injection molding, extrusion, thermoforming, rotation molding, compression molding, compounding or impregnation, to manufacture an article.

According to one embodiment, wet impregnation for preparing a pre-impregnated composite strip referred to as a tape may be conducted by depositing the aqueous dispersion of polyaryletherketone (PAEK) pellets (powders) and phosphate salt(s) on carbon or glass fiber, for example. More specifically, the dispersion may comprise polyaryletherketone (PAEK) pellets (powders) and phosphate salt(s) and surfactant in an aqueous solution, for example. Thereby, fiber covered with the aqueous dispersion may then pass through an oven where water is evaporated, and then, passes through a die at high temperature (commonly, exceeding 370°C), thus melting stabilized polyetherketoneketone (PEKK) polymer and exactly coating the fiber. After cooling, a tape or pre-impregnated strip is obtained, which is then subjected to assembling and/or superimposing to re-melt and form a composite article.

According to one embodiment, the main advantage of the phosphate salt is that even if heated to a very high temperature (for example, above 350°C), it does not emit volatile organic compounds but simply lose water in the form of vapor. Thus, the phosphate salt can interrupt coating of fiber, or make the defects of the finally prepared article appear, without any risk regarding environment and/or health, and thus, porosity which may cause deterioration of mechanical properties, may not be generated.

Although the invention has been explained in detail by preferable embodiments referring to drawings, the scope of technical idea of the invention is not limited to such drawings and embodiments. Thus, various modifications or embodiments in equivalent range may exist within the range of technical idea of the invention. Therefore, the scope of the right of the technical idea according to the invention should be interpreted by the claims, and it should be interpreted that technical ideas within a range equal or equivalent thereto belong to the scope of the right of the invention.

As explained, the method for crystallizing polyaryletherketone (PAEK) according to the invention can increase crystallinity of polyaryletherketone (PAEK) by a simple method of heat treating polyaryletherketone (PAEK) in the form of pellets of powders at a temperature of glass transition temperature(Tg) to melting point(Tm) under inert gas atmosphere.

Further, the crystallinity of prepared polyaryletherketone (PAEK) can be controlled by controlling the temperature and time of the heat treatment, and the flow rate of inert gas fed.

Moreover, caking of polyaryletherketone (PAEK) in the form of pellets of powders can be prevented by continuously agitating or vibrating polyaryletherketone (PAEK) during the heat treatment.

Finally, oxidation and discoloration of polyaryletherketone (PAEK) can be prevented by conducting the heat treatment under inert gas atmosphere.

## Claims

1. A method for crystallizing polyaryletherketone (PAEK), comprising steps of:
preparing polyaryletherketone (PAEK) in a form of pellet or powder that is amorphous or has crystallinity of 5% or less; and
heat treating the prepared polyaryletherketone (PAEK) at a temperature of glass transition temperature (Tg) to melting point (Tm) under inert gas atmosphere.

2. The method for crystallizing polyaryletherketone (PAEK) according to claim 1, wherein the polyaryletherketone (PAEK) is polymer selected from the group consisting of polyetherketoneketone (PEKK), polyetheretherketone (PEEK), polyetheretherketoneketone (PEEKK), polyetherketoneetherketoneketone (PEKEKK), polyetheretheretherketone (PEEEK), polyetherdiphenyletherketone (PEDEK) and a combination thereof.

3. The method for crystallizing polyaryletherketone (PAEK) according to claim 1, wherein the polyaryletherketone (PAEK) has T:I isomer ratio of 50:50 to 90:10.

4. The method for crystallizing polyaryletherketone (PAEK) according to claim 1, wherein the polyaryletherketone (PAEK) has T:I isomer ratio of 70:30.

5. The method for crystallizing polyaryletherketone (PAEK) according to claim 1, wherein the polyaryletherketone (PAEK) in the form of pellet or powder has a diameter of 1 mm to 10 mm and a length of 1 mm to 10 mm.

6. The method for crystallizing polyaryletherketone (PAEK) according to claim 1, wherein the polyaryletherketone (PAEK) that is amorphous or has crystallinity of 5% or less is prepared by heat treatment at a temperature of 160°C to 300°C.

7. The method for crystallizing polyaryletherketone (PAEK) according to claim 1, wherein the heat treatment of the polyaryletherketone (PAEK) is conducted at a temperature of 150°C to 340°C.

8. The method for crystallizing polyaryletherketone (PAEK) according to claim 1, wherein the heat treatment of the polyaryletherketone (PAEK) is conducted at a temperature of 160°C to 280°C.

9. The method for crystallizing polyaryletherketone (PAEK) according to claim 1, wherein the heat treatment of the polyaryletherketone (PAEK) is conducted at a temperature of 160°C to 250°C.

10. The method for crystallizing polyaryletherketone (PAEK) according to claim 1, wherein the heat treatment of the polyaryletherketone (PAEK) is conducted for 10 minutes or more.

11. The method for crystallizing polyaryletherketone (PAEK) according to claim 1, wherein the heat treatment of the polyaryletherketone (PAEK) is conducted for 10 minutes to 60 minutes.

12. The method for crystallizing polyaryletherketone (PAEK) according to claim 1, wherein the heat treatment of the polyaryletherketone (PAEK) is conducted while agitating the polyaryletherketone (PAEK) in the form of pellet or powder.

13. The method for crystallizing polyaryletherketone (PAEK) according to claim 1, wherein the heat treatment of the polyaryletherketone (PAEK) is conducted using a spiral elevator for vibrating the polyaryletherketone (PAEK) in the form of pellet or powder.

14. The method for crystallizing polyaryletherketone (PAEK) according to claim 1, wherein the inert gas is continuously fed to the polyaryletherketone (PAEK),
and the feed flow rate of the inert gas is 10 mL/min or more.

15. The method for crystallizing polyaryletherketone (PAEK) according to claim 14, wherein the feed flow rate of the inert gas is 20 mL/min to 80 mL/min.

16. The method for crystallizing polyaryletherketone (PAEK) according to claim 1, wherein a color difference (△) between the prepared polyaryletherketone (PAEK) and heat treated polyaryletherketone (PAEK) is less than 1.8.

17. Crystalline polyaryletherketone (PAEK) produced by the crystallization method of claim 1.

18. The crystalline polyaryletherketone (PAEK) according to claim 17, wherein the crystallinity of the produced crystalline polyaryletherketone (PAEK) is 20% or more.

19. The crystalline polyaryletherketone (PAEK) according to claim 17, wherein the crystallinity of the produced crystalline polyaryletherketone (PAEK) is 30% to 35%.

20. An article manufactured by a technique selected from laser sintering, fused deposition modeling, forming, injection molding, extrusion, thermoforming, rotation molding, compression molding, compounding or impregnation, using the crystalline polyaryletherketone (PAEK) produced by the crystallization method of claim 1.
